# FASCICULE DE BREVET EUROPEEN

(11) **EP 1 232 069 B1**
(45) Date de publication et mention de la délivrance du brevet: **03.01.2007**
(21) Numéro de dépôt: 00985304.5
(22) Date de dépôt: 22.11.2000
(51) Int. Cl.: B60N 2/24

(54) **SIEGE SUSPENDU A FIXATION LATERALE SUR UN MONTANT DE STRUCTURE POUR VEHICULE DE TRANSPORT**
EINHÄNGESITZ MIT SEITENFIXIERUNG AN EINER WANDVERSTEIFUNG FÜR TRANSPORTFAHRZEUGE
SUSPENDED SEAT LATERALLY FIXED ON A STRUCTURAL VERTICAL MEMBER FOR TRANSPORT VEHICLE

(30) Priorité: 22.11.1999 FR 9914669
(43) Date de publication de la demande: 21.08.2002
(73) Titulaire: LOHR INDUSTRIE S.A., F-67980 Hangenbieten (FR)
(72) Inventeur: LOHR, Robert, F-67980 Hangenbieten (FR); ANDRE, Jean-Luc, F-67210 Obernai (FR); MANDART, Didier, F-67200 Strasbourg (FR)
(74) Mandataire: Metz, Paul
(86) Numéro de dépôt international: PCT/FR2000/003251
(87) Numéro de publication internationale: WO 2001/038129

(56) Documents cités:
- DE-A- 4 403 460
- FR-A- 2 306 659
- US-A- 3 625 565
- US-A- 3 630 566
- US-A- 3 762 764
- US-A- 3 797 887
- US-A- 3 893 729
- US-A- 3 944 283
- US-A- 4 088 367
- US-A- 4 249 769
- US-A- 4 275 925
- US-A- 4 600 241
- US-A- 5 464 273

## Description

L'invention se rapporte à un siège suspendu monoplace ou multiplace, banquette ou autre support pour s'asseoir pour véhicule de transport de passagers.

Le siège selon l'invention est destiné à être fixé en porte-à-faux sur un montant de structure du véhicule.

La fixation de montage est réalisée au niveau d'une des parois latérales du siège, dégageant ainsi l'espace situé entre la partie inférieure du siège et le plancher du véhicule.

Les sièges utilisés de façon classique dans les véhicules de transport en commun sont généralement fixés sur le plancher du véhicule au moyen d'un ou plusieurs pieds de forme et de taille diverses selon les réalisations. Cette solution présente de nombreux inconvénients.

Pour les voyageurs, ces pieds de sièges représentent une gêne car ils s'opposent à une extension confortable des jambes des passagers assis.

En outre, en cas d'affluence il est nécessaire de dégager au maximum l'allée centrale et les zones d'entrée-sortie du véhicule afin de permettre le transport d'un nombre très important de voyageurs. Or, les pieds de ces sièges encombrent l'espace situé sous les fauteuils, empêchant les voyageurs d'y ranger leurs paquets et leurs bagages volumineux. De la même façon, les passagers debout dans l'allée centrale ne peuvent pas y glisser l'avant de leurs pieds.

Ce piétement d'appui du siège au sol est également gênant pour le personnel chargé du nettoyage du véhicule de transport en commun. Pour assurer la propreté du plancher du véhicule, il est nécessaire de contourner les pieds des sièges, ce qui limite l'utilisation des appareils et robots de nettoyage. La durée et le coût de l'opération de nettoyage sont de ce fait considérablement augmentés.

Le but de l'invention est de fournir un siège pour véhicule de transport en commun par exemple urbain, de structure simple et peu coûteuse, permettant une pose aisée et rapide et laissant libre l'espace inférieur au siège.

On connaît déjà des sièges pour véhicules de transport en commun qui ne comportent pas de piétement au sol, comme par exemple le siège décrit dans le brevet américain US 5.464.273 au nom de MAKOTO.

Ce siège se compose d'une structure composite très complexe constituée d'une structure interne, d'une structure externe et d'un panneau arrière de couverture, comprenant de nombreuses pièces soudées les unes aux autres.

Ce siège est fixé contre le mur du véhicule à travers son flanc latéral, constitué d'une équerre extérieure et d'une équerre intérieure, au moyen de trois boulons disposés à l'extrémité supérieure de sa branche verticale, à l'extrémité avant de sa branche horizontale et à la jonction de ces deux branches. Il est également suspendu au plafond à l'aide d'une structure porteuse verticale située au niveau de l'extrémité supérieure de son flanc opposé.

Du fait de sa construction compliquée le siège antérieur MAKOTO présente un coût élevé de fabrication et d'utilisation. Il est de plus difficilement réglable en largeur.

En outre, sa structure lourde et complexe exclut la possibilité d'une fixation uniquement en porte-à-faux au niveau de son flanc latéral sans soutient par le haut.

Par ailleurs, les points latéraux de fixation n'étant pas uniquement disposés sur la partie verticale de sa pièce de flanc, il est impossible de fixer ce siège sur un montant du véhicule.

Pour résoudre ce problème technique le dispositif de siège selon l'invention présente une structure très simple réalisée en deux parties :
- deux pièces de flanc à branche verticale et horizontale réunies entre elles par au moins une traverse de liaison et de renfort pour constituer un corps de siège ;
- au moins un support d'assise recouvrant le corps de siège, de préférence de forme anatomique et habillé d'une couche de rembourrage.

L'une des pièces de flanc est rapportée contre puis fixée uniquement au niveau de sa branche verticale sur un montant de structure ou un autre élément de carrosserie du véhicule de transport en commun, à l'aide de moyens de fixation par exemple à boulons.

En outre, la largeur du corps de siège est obtenue par la seule mise à longueur de sa au moins une traverse de liaison et de renfort.

Le siège selon l'invention, retenu par un dispositif de fixation latérale, se trouve suspendu en porte-à-faux contre le montant et plus généralement contre une paroi. Il laisse ainsi l'espace inférieur totalement libre.

Cette disposition est particulièrement avantageuse. Elle permet par exemple aux passagers assis d'étendre leurs jambes sans être gênés par les pieds du siège situé devant eux.

En cas d'affluence, les passagers peuvent ranger leurs paquets et bagages sous les sièges afin de dégager les allées et les zones d'embarquement et de débarquement. Les passagers debout dans l'allée centrale peuvent également y glisser l'extrémité de leurs pieds.

D'un point de vue esthétique, cette absence de piétement d'appui des sièges sur le sol donne l'impression d'un espace intérieur plus vaste du fait de l'absence de lignes de rupture de la perspective.

L'ensemble de la surface du plancher d'une voiture d'une rame peut être aperçu d'un seul coup d'oeil, ce qui permet de s'assurer aisément que les passagers n'ont rien oublié et augmente la sécurité pendant les périodes de menace terroriste en facilitant la détection de paquets ou bagages suspects.

En outre, le nettoyage et l'entretien du véhicule de transport en commun sont grandement facilités du fait de l'accessibilité aisée à la totalité du plancher. L'utilisation de robots de nettoyage est possible, ce qui permet de réaliser un nettoyage rapide, efficace et économique du sol du véhicule. On peut par exemple imaginer l'utilisation de robots, circulant dans l'allée centrale, munis de bras de nettoyage aptes à se glisser sous les sièges.

D'autre part, sa structure étant très simple, le coût unitaire de fabrication du siège selon l'invention est réduit. La pose d'un tel siège est rapide et aisée.

Le siège selon la présente invention est modulaire. On peut ainsi envisager par exemple une version monoplace, une version multiplace avec assises côte à côte et une version multiplace avec assises dos à dos du siège suspendu selon l'invention. Ces différentes variantes peuvent être réalisées au moyen d'un corps de siège spécifique ou par un simple accrochage de plusieurs unités de base du siège selon l'invention solidarisées les unes aux autres.

Le siège étant de préférence symétrique, il peut indifféremment être fixé contre l'une ou l'autre des parois intérieures du véhicule de transport en commun.

L'adaptation du siège en fonction des besoins est rapide et aisée. Ainsi, lors d'un réaménagement intérieur du véhicule ou lors d'une modification intérieure momentanée, le siège peut être démonté, réduit, déplacé ou autrement modifié en fonction des besoins. On peut aussi le personnaliser ou changer sa personnalisation facilement. Le changement de sa couleur principale s'effectue par la mise en place rapide d'un autre habillage.

D'autres caractéristiques et avantages de l'invention apparaîtront à la lecture de la description détaillée qui va suivre, description faite en référence aux dessins annexés, dans lesquels :
- la figure 1 est une vue schématique en perspective de l'avant d'un siège monoplace suspendu selon l'invention dans ses moyens de base avec support d'assise décalé dans l'espace ;
- la figure 2 est une vue schématique en perspective de l'avant d'un siège suspendu biplace avec assises dos à dos dans ses moyens de base, les deux supports d'assise étant décalés dans l'espace ;
- la figure 3 est une perspective d'ensemble vue de l'avant d'un mode de réalisation de la version de base monoplace d'un siège suspendu selon la présente invention ;
- la figure 4 est une vue en perspective, similaire à celle de la figure 3, de l'avant du siège suspendu selon l'invention mais avec le support d'assise décalé dans l'espace ;
- la figure 5 est une vue en perspective de l'arrière de la version monoplace de base du siège suspendu selon l'invention ;
- la figure 6 est une vue en perspective de l'arrière d'une version monoplace du siège suspendu selon l'invention comportant un appui ischiatique;
- la figure 7 est une vue en perspective de l'avant d'une version monoplace du siège suspendu selon l'invention comportant un appui-tête et présentant sur son flanc latéral libre un dispositif de retenue ;
- la figure 8 est une vue en perspective de l'avant d'une version biplace avec assises dos à dos du siège suspendu selon l'invention ;
- la figure 9 est une vue en perspective de l'avant d'une version biplace avec assises côte à côte du siège suspendu selon l'invention, l'un des supports d'assise étant enlevé ;
- la figure 10 est une vue en perspective de l'avant d'une autre version biplace avec assises côte à côte du siège suspendu selon l'invention, formé d'une unique coque moulée et d'un unique support d'assise.

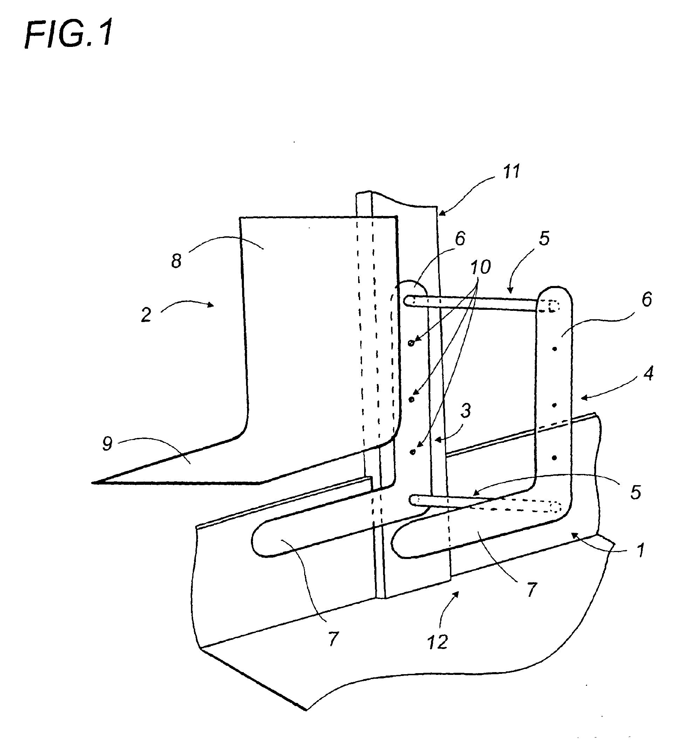

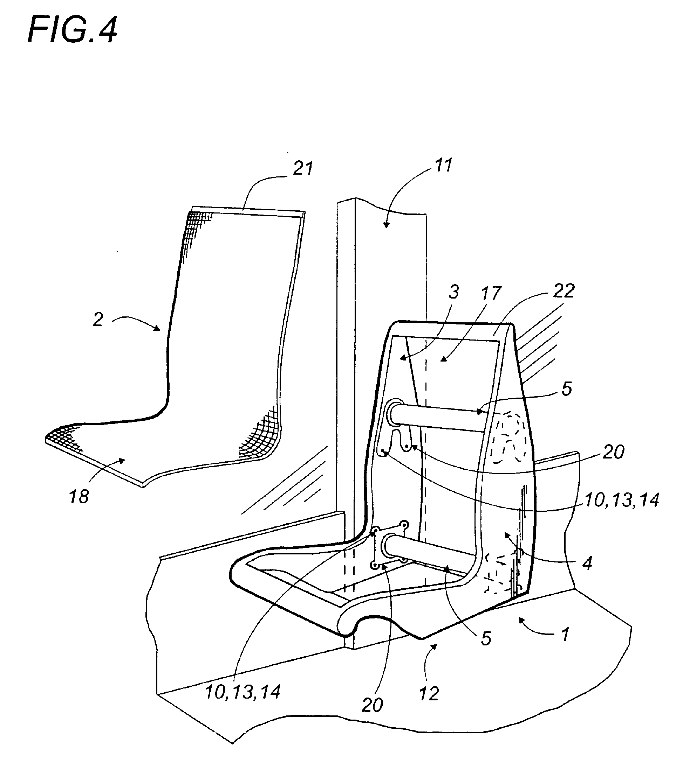

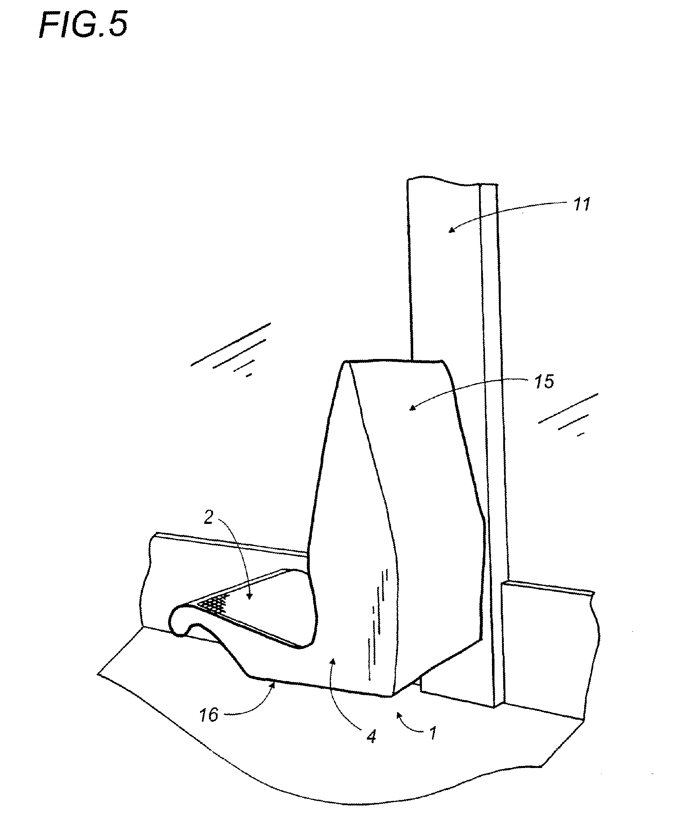

Le dispositif de siège suspendu selon la présente invention va maintenant être décrit de façon détaillée en référence aux figures 1 à 10. Les éléments équivalents représentés sur les différentes figures porteront les mêmes références numériques.

L'invention procède du principe général inventif qui consiste à former un siège pour un passager d'un véhicule de transport en commun, au moyen de deux pièces de flanc réunies par au moins une et de préférence deux traverses, les pièces de flanc étant conformées de façon à former avec les traverses un corps de siège. Ce corps de siège dont la largeur est obtenue par la seule mise à longueur de son unique ou de ses traverse(s) est complété par au moins un support d'assise d'une seule pièce de largeur adaptée venant se monter sur le corps de siège. L'ensemble est habillé par un revêtement, complété éventuellement par des pièces auxiliaires adaptées, pour constituer un siège complet prêt à poser dans l'espace intérieur d'un véhicule de transport en commun ou à accoupler latéralement à un deuxième siège pour constituer une unité biplace.

Une des originalités de l'invention concerne les pièces de flanc qui comportent au moins pour l'une d'entre elles des moyens de fixation à une paroi ou à un montant, par exemple vertical, de structure de la voiture à équiper en sièges et pour l'autre une aptitude ou une prédisposition au jumelage avec un deuxième siège identique pour constituer un ensemble biplace.

Sur les différentes figures, un siège a été représenté. Ce siège est destiné à être monté dans un véhicule de transport en commun notamment urbain, tel que par exemple une rame de tramway, de métro, un autobus ou tout autre véhicule de transport urbain de passagers. On peut envisager, sans sortir du cadre de l'invention, d'autres utilisations de ce siège suspendu, notamment dans un wagon de véhicule ferroviaire, dans une gare ou une station d'attente pour véhicule de transport urbain ou dans tout autre endroit où le dégagement de l'espace inférieur au siège se révèlerait avantageux.

Le siège présente une structure très simple comprenant deux parties principales : un corps de siège 1 et un support d'assise 2.

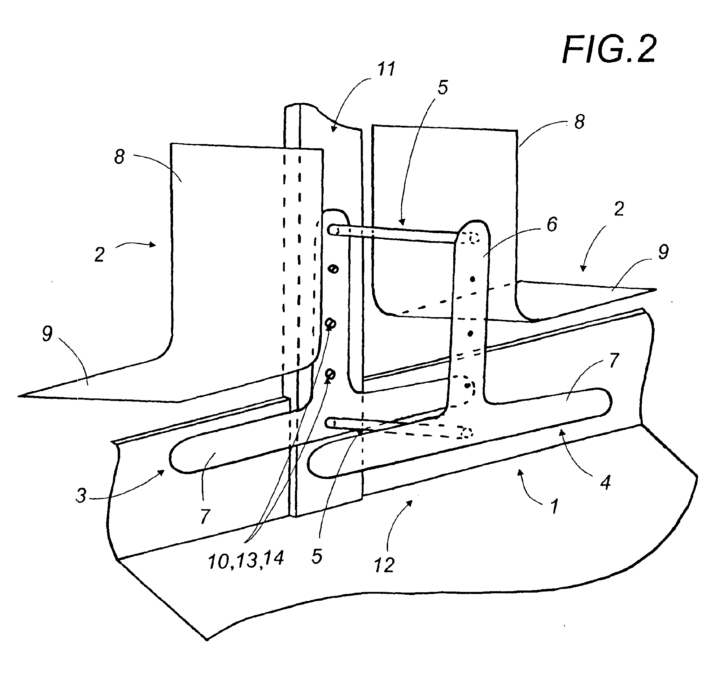

On décrira tout d'abord la variante de base du siège suspendu selon la présente invention représentée sur les figures 1 et 2, la figure 1 illustrant une version monoplace et la figure 2 une version biplace avec assise dos à dos.

Le corps de siège 1 est constitué de deux pièces de flanc 3 et 4 réunies par une ou plusieurs traverses 5 de liaison et de renfort, lui conférant une rigidité mécanique suffisante. Les pièces de flanc 3 et 4 sont réalisées chacune sous la forme d'une pièce sensiblement plate, les deux étant de préférence identiques et par exemple en métal, notamment en aluminium. Elles présentent un contour de forme générale en L pour la version monoplace de la figure 1 et de forme générale en T renversé pour celle biplace de la figure 2.

Les traverses 5 de liaison et de renfort sont de préférence au nombre de deux. De forme par exemple tubulaire, elles s'étendent perpendiculairement aux deux pièces de flanc 3 et 4 qu'elles relient de façon préférentielle au niveau des parties terminales de la branche verticale 6 du L ou du T. Ces traverses 5 peuvent présenter un diamètre ou une forme de section différente de celle représentée sans sortir du cadre de l'invention. On peut également envisager l'utilisation d'une ou plusieurs plaques transversales de renfort.

Lorsque l'adaptation en largeur du siège est importante, une variante à traverses 5 de longueur réglable est proposée.

Il s'agit par exemple de traverses 5 réalisées en deux parties s'emmanchant l'une dans l'autre de façon télescopique. Pour des raisons de sécurité, ces parties peuvent être immobilisées en pivotement par des structures longitudinales de blocage : cannelures, rainures ou autres. L'immobilisation longitudinale est garantie par exemple par des éléments transversaux : broches, clavettes, tétons ou autres.

Le corps de siège 1, constitué par les deux pièces de flanc 3 et 4 reliées par les traverses 5 de liaison et de renfort, est de préférence réalisé en une seule pièce, notamment mais non limitativement en aluminium moulé. Il peut également être composé de plusieurs pièces indépendantes, préalablement assemblées pour former le corps de siège 1.

Un support d'assise 2 de forme anatomique est monté sur le corps de siège 1 afin de recevoir en appui le corps du passager. Le support d'assise 2 se présente ici sous la forme d'une plaque mince unique, sensiblement rectangulaire, incurvée et galbée selon un angle correspondant à celui formé par les branches sensiblement horizontales 7 et verticales 6 des pièces de flancs 3 et 4 sur lesquelles elle s'appuie. Le support d'assise 2 comporte ainsi une partie supérieure 8 servant de dossier et une partie inférieure 9 sur laquelle s'assoit le passager. Le support d'assise est de préférence réalisé d'une seule pièce mais peut de la même façon être réalisé par l'assemblage de plusieurs éléments constitutifs.

Le support d'assise 2 est réalisé d'une seule pièce, par exemple par moulage ou autre procédé, selon des dimensions correspondant à la largeur d'assise souhaitée.

Le support d'assise 2 peut également être réalisé à partir d'une forme profilée, produite en grande longueur et sectionnée à une longueur déterminée pour constituer un tronçon de longueur adaptée permettant de se monter sur le corps de siège.

Le support d'assise 2 est rapporté ou autrement monté sur le corps de siège 1 et maintenu à l'aide d'un quelconque moyen de fixation non représenté.

Son caractère amovible est plus ou moins prononcé selon le mode de liaison et de maintien choisi entre le corps de siège 1 et le support d'assise 2. On peut par exemple utiliser des moyens de maintien à fixation rapide : par clipsage, brochage, accrochage ou autres lorsque la rapidité et la facilité de dissociation sont visées.

Le mode de réalisation biplace représenté sur la figure 2 comporte deux supports d'assise 2 identiques, disposés dos à dos de façon symétrique par rapport à la branche verticale 6 du T. Chacun de ces deux supports d'assise 2 est rapporté en appui sur un bord de la branche verticale 6 et de la moitié de la branche horizontale 7 de chacune des deux pièces de flanc 3 et 4. Ces deux supports d'assise 2 sont maintenus en position sur le corps de siège 1 à l'aide d'un quelconque moyen de fixation non représenté. Ce mode de réalisation du siège selon l'invention permet à deux voyageurs de s'asseoir simultanément dos à dos sur le siège.

Le support d'assise peut comprendre un revêtement renfermant une épaisseur de matière de rembourrage pour constituer un siège complet prêt à poser. Certaines pièces auxiliaires adaptées (non représentées), telles que par exemple un dispositif de retenue, un appui-tête ou des accoudoirs, peuvent également être ajoutées sans sortir du cadre de l'invention.

De manière évidente, on peut envisager d'augmenter la longueur des traverses de liaison et de renfort 5 afin d'élargir le corps de siège 1. Un support d'assise 2 de largeur correspondante est ensuite mis en place, permettant ainsi d'obtenir un siège multiplace du type banquette. Une variante avec plusieurs supports d'assise 2 individuels juxtaposés peut également être imaginée.

L'une des pièces de flanc 3 ou 4 comporte des moyens de fixation 10 permettant de fixer le siège latéralement, uniquement au niveau de sa branche verticale 6, à un montant 11, par exemple vertical, de structure ou à toute autre pièce adaptée de la carrosserie de la voiture à équiper en sièges. Le siège, fixé en porte-à-faux contre le montant, est suspendu au-dessus du sol. L'espace inférieur 12, situé sous le siège, est ainsi entièrement dégagé.

Les moyens de fixation 10 sont de nature quelconque. Il peut par exemple s'agir d'un ensemble de vis ou de boulons 13 coopérant avec des perçages 14, filetés ou non, réalisés à travers la paroi de la pièce de flanc 3 ou 4 concernée et éventuellement avec des pièces-écrous non représentées.

La pièce de flanc opposée, par exemple 4, peut également présenter des perçages 14 ou tout autre dispositif équivalent. Le siège selon l'invention peut ainsi avantageusement être rapporté contre tout montant de structure 11, quel que soit le côté du véhicule sur lequel le montant se situe et quel que soit le sens d'orientation souhaité pour le siège.

Cette disposition permet aussi de jumeler deux sièges selon la présente invention en les fixant latéralement l'un à l'autre. On peut ainsi, par exemple, réaliser un siège suspendu multiplace à fixation latérale en jumelant successivement un ou plusieurs sièges monoplaces identiques à un premier siège fixé en porte-à-faux contre un montant de structure du véhicule. Cette réalisation est équivalente à la variante de type banquette précédemment décrite. On peut également jumeler de cette manière deux sièges biplaces avec assises dos à dos pour obtenir un ensemble suspendu permettant à quatre passagers de s'asseoir.

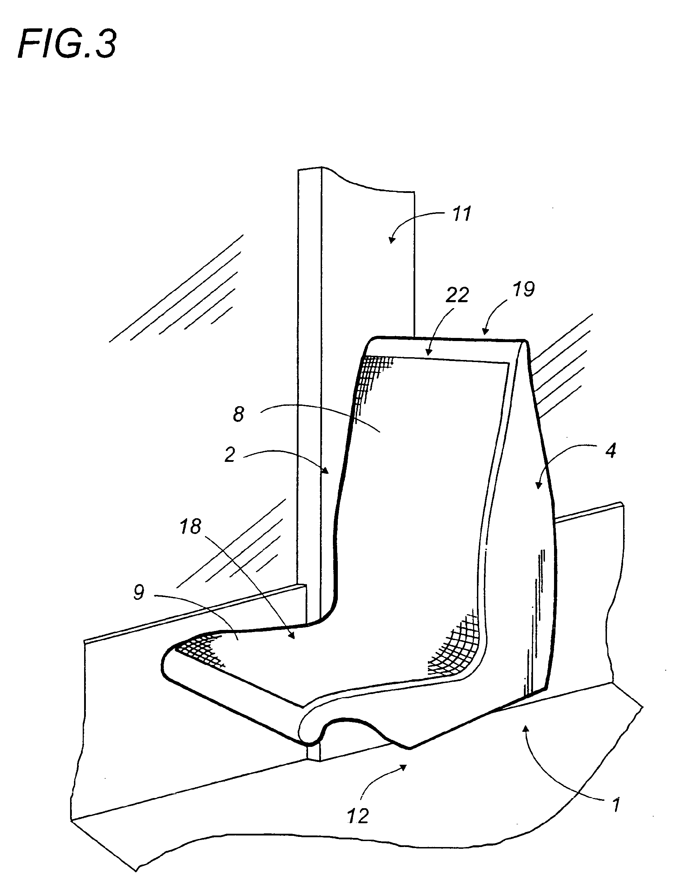

Le mode de réalisation préféré du siège suspendu selon l'invention va maintenant être décrit en référence aux figures 3 à 10.

Le siège possède comme dans la variante précédente une structure très simple en deux parties constituées d'un corps de siège 1 et d'un support d'assise 2.

Le corps de siège 1. est cette fois réalisé en une seule pièce, par exemple mais non limitativement en aluminium moulé. Il est conformé en une coque creuse comportant une paroi arrière 15, une paroi inférieure 16, deux parois de flanc 3 et 4 équivalentes aux deux pièces de flanc précédentes et présente une ouverture 17 sur sa face avant.

Le corps de siège ou coque 1 renferme une ou plusieurs traverses de liaison et de renfort 5, afin de conférer au corps de siège une rigidité mécanique suffisante. Les traverses de liaison et de renfort 5, de forme par exemple tubulaire, sont de préférence au nombre de deux. Elles s'étendent perpendiculairement aux deux parois de flanc 3 et 4 qu'elles relient de façon préférentielle au niveau de leur partie supérieure et de la courbure entre la paroi arrière 15 et la paroi inférieure 16.

Ces traverses de liaison et de renfort 5 peuvent être réalisées en une seule pièce avec la coque 1 ou bien être assemblées par la suite à l'intérieur de celle-ci à l'aide d'un quelconque moyen de fixation, par exemple par vissage.

Le support d'assise 2 se présente dans cette variante comme une plaque mince, sensiblement rectangulaire, de profil et de contour correspondant à l'ouverture 17 du corps de siège. Ce support d'assise 2 est réalisé selon une forme incurvée et anatomique afin de recevoir en appui sur sa partie supérieure 8 le dos et sur sa partie inférieure 9 les fesses du passager.

Le support d'assise 2 est rapporté sur le corps de siège 1 en obturation de l'ouverture 17 de sa face avant. Il est maintenu en position à l'aide d'un quelconque moyen de fixation, d'encastrement ou d'immobilisation non représenté. Il peut en outre comporter une épaisseur de rembourrage 18 augmentant le confort des.passagers assis sur le siège.

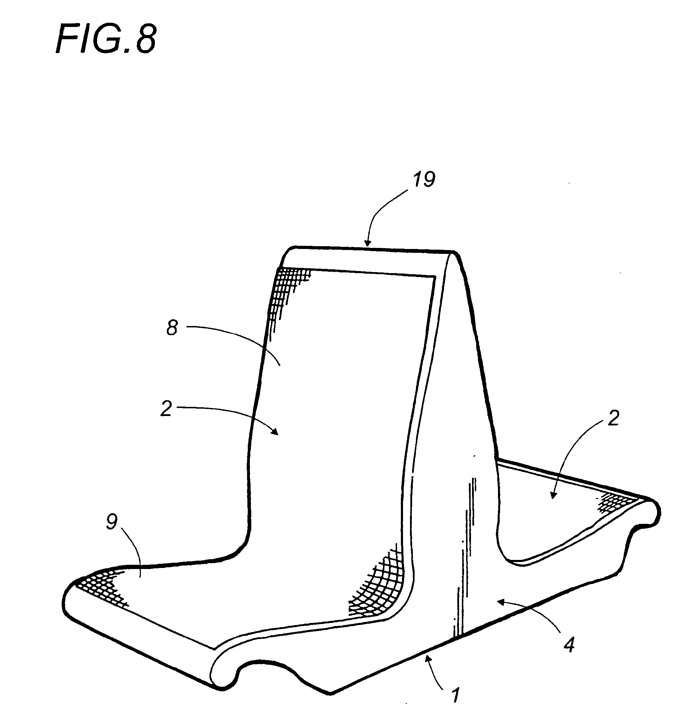

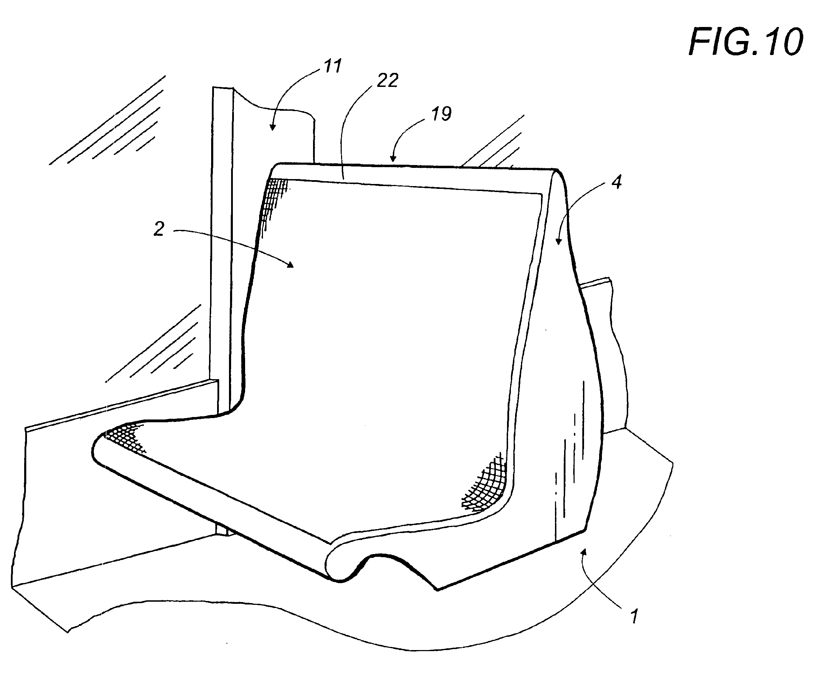

On peut, sans échapper à la portée de l'invention, envisager différentes variantes du corps de siège 1 représentées sur les figures 8 et 10.

La figure 8 représente une version biplace du siège suspendu dans laquelle les deux assises sont disposées dos à dos. La coque creuse formant le corps de siège 1 comporte deux parois latérales 3 et 4 de forme générale en T renversé, reliées au niveau de leur sommet par une paroi supérieure 19 étroite et de leur fond par la paroi inférieure 16. Comme dans le mode de réalisation précédent, la coque creuse renferme au moins une et de préférences deux traverses de liaison et de renfort 5. Le corps de siège 1 présente deux ouvertures telles que 17 symétriques sur ses deux faces opposées avant et arrière. Deux supports d'assise 2 par exemple identiques, fixés de la même façon que précédemment, viennent obturer ces deux ouvertures 17 afin de constituer un ensemble d'assise complet sur lequel deux voyageurs peuvent s'asseoir simultanément dos à dos.

Le mode de réalisation de la figure 10 ne diffère de la version de base illustrée par la figure 3, que par une largeur accrue des parois arrière 15, inférieure 16 et supérieure 19, et par une longueur augmentée en conséquence de la ou des traverses de liaison et de renfort 5. L'ouverture 17 sur la face avant a également été agrandie, permettant ainsi l'insertion d'un support d'assise 2 élargi pouvant servir d'appui à plusieurs passagers. On obtient ainsi un siège multiplace de type banquette.

On peut également prévoir une variante formée de deux banquettes disposées dos à dos.

Le support d'assise 2 peut être réalisé d'une seule pièce, comportant ou non une démarcation indiquant la séparation entre les différentes places assises individuelles. Il peut également consister en la juxtaposition de plusieurs supports d'assise individuels.

Avantageusement, il peut également être réalisé à partir d'une forme profilée de grande longueur, sectionnée à une longueur adaptée à la largeur souhaitée de la banquette.

Quel que soit le mode de réalisation, le siège selon l'invention comporte sur au moins l'une de ses parois latérales 3 ou 4 des moyens de fixation 10 permettant de fixer le siège latéralement à un montant 11 de structure ou à une paroi de la voiture à équiper en sièges.

Sur les sièges des figures 3 à 10, ces moyens de fixation consistent en un ensemble de perçages 14 coopérant avec un ensemble de boulons 13 pour maintenir le siège contre le montant de structure 11. Les perçages 14, par exemple au nombre de six, sont réalisés à travers la paroi de flanc 3 ou 4 concernée, de préférence au niveau de surépaisseurs de renfort 20 en forme d'oreille.

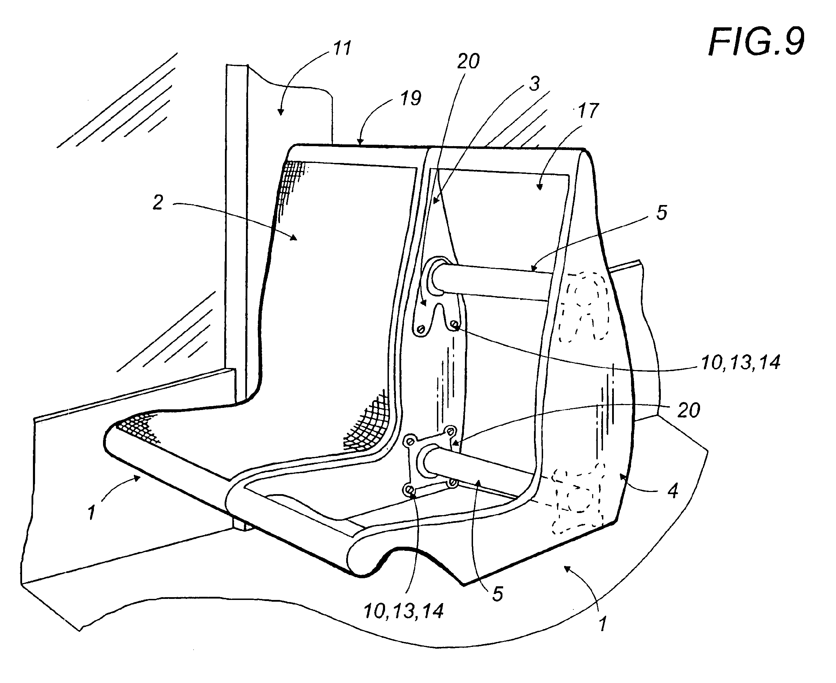

Comme précédemment, la paroi de flanc opposée, par exemple 4, peut aussi comporter des perçages 14 permettant au siège d'être monté indifféremment contre tout montant de structure 11 quel que soit le côté ou d'être jumelé à un siège individuel identique. On peut ainsi obtenir très facilement un siège multiplace de type banquette équivalent à la réalisation de la figure 10 précédemment décrite. Ce mode de réalisation a été représenté sur la figure 9. On peut également jumeler de cette manière deux sièges biplaces avec assises dos à dos pour obtenir un ensemble suspendu permettant à quatre passagers de s'asseoir.

Le siège suspendu selon l'invention peut être mis en place très facilement, en un temps très court. Pour ce faire, il suffit de positionner la coque moulée constituant le corps de siège 1 contre un montant de structure 11 approprié, à une hauteur adaptée par rapport au sol pour assurer une position assise confortable. La paroi latérale 3 ou 4 du corps de siège 1 est fixée au montant de structure 11 à l'aide de boulons 13 traversant les perçages 14. La pose des boulons s'effectue à travers l'ouverture 17 du corps de siège. Celle-ci est de dimension suffisante pour que le monteur n'éprouve aucune gêne lors de cette opération. Le support d'assise 2 est ensuite rapporté en obturation de l'ouverture 17. Son extrémité supérieure 21 peut être glissée sous le bord supérieur 22 de l'ouverture 17, l'ensemble étant maintenu fixe par exemple au moyen d'une simple vis.

Le siège, fixé en porte-à-faux contre le montant, est ainsi suspendu au-dessus du sol. L'espace inférieur 12 situé sous le siège est entièrement dégagé, ce qui présente tous les avantages précédemment évoqués.

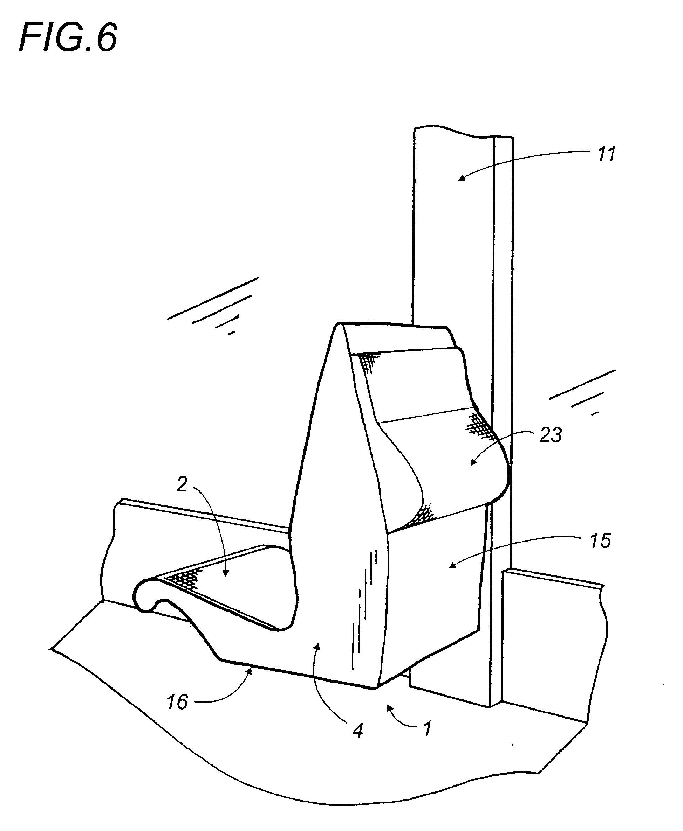

Certaines pièces auxiliaires peuvent éventuellement être adaptées au siège selon l'invention. La face arrière du siège peut notamment comporter un coussin d'appui ischiatique 23 comme représenté sur la figure 6, permettant au passager se tenant derrière le siège suspendu de s'appuyer par les fesses dans une position « assis-debout » moins fatigante que la station debout et moins encombrante en cas de forte affluence que la station assise.

Le siège suspendu selon l'invention peut également être pourvu par exemple d'accoudoirs, d'un appui-tête 24, d'un dispositif d'appui ou de retenue 25 pour les voyageurs debout près du siège ou de tout autre dispositif auxiliaire envisageable.

Le dispositif d'appui ou de retenue 25 est de préférence fixé au corps de siège 1 uniquement au niveau de sa pièce de flanc 3 ou 4 qui n'est pas fixée sur un montant 11 de structure ou sur un autre élément de carrosserie du véhicule de transport.

Les pièces de flanc peuvent comporter des moyens de prédisposition pour recevoir l'une ou l'autre des pièces ou dispositifs ci-dessus.

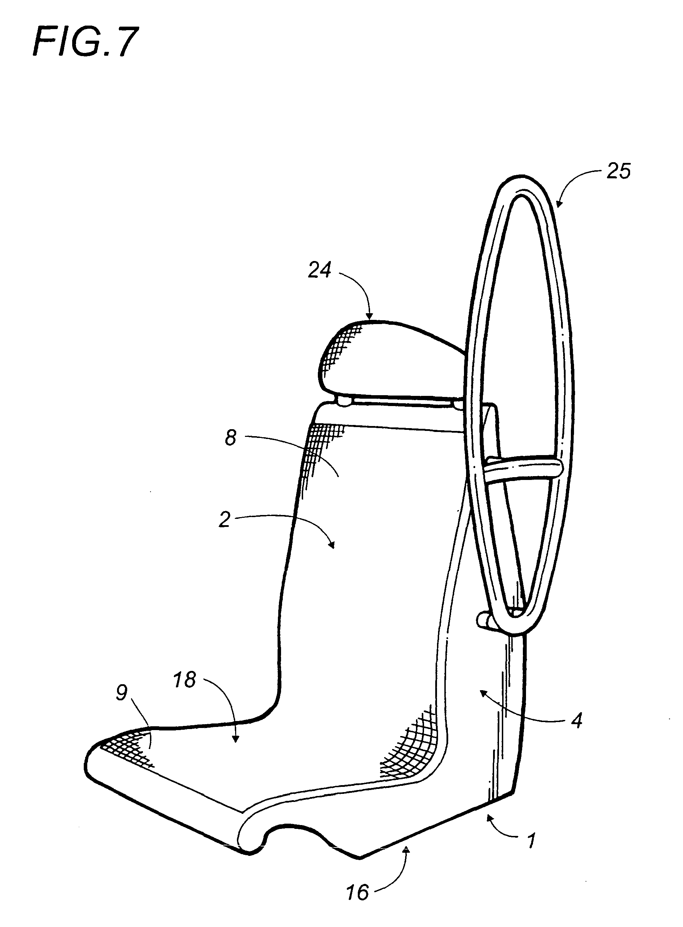

Certaines de ces pièces, un appui-tête 24 et un dispositif de retenue 25 de type main-courante, ont été représentées sur la figure 7. Le siège selon l'invention n'est évidemment pas limité par la présence, les dimensions ou la forme de ces pièces auxiliaires citées simplement à titre d'exemple.

## Revendications

1. Siège suspendu monoplace ou multiplace, banquette ou autre support pour s'asseoir pour véhicule de transport de passagers **caractérisé en ce qu'**il est constitué de :
. deux pièces de flanc (3) et (4) à branche verticale (6) et horizontale (7) réunies entre elles par au moins une traverse (5) de liaison et de renfort pour constituer un corps de siège (1) ;
. d'au moins un support d'assise (2) recouvrant le corps de siège (1) ;
et **en ce que** l'une des pièces de flanc (3) ou (4) est apte à être fixée uniquement au niveau de sa branche verticale (6) sur un montant (11) de structure ou un autre élément de carrosserie du véhicule de transport à une hauteur appropriée, de façon que le siège se retrouve monté en porte-à-faux contre ce montant ou cet élément de carrosserie du véhicule et **en ce que** la largeur du corps de siège (1) est obtenue par la seule mise à longueur de sa au moins une traverse (5) de liaison et de renfort.

2. Siège selon la revendication 1 **caractérisé en ce qu'**un dispositif d'appui ou de retenue (25) est fixé au corps de siège (1) uniquement au niveau de sa pièce de flanc (3) ou (4) qui n'est pas fixée sur un montant (11) de structure ou autre élément de carrosserie du véhicule de transport.

3. Siège selon la revendication 1 ou 2 **caractérisé en ce que** le support d'assise (2) est amovible.

4. Siège selon l'une quelconque des revendications précédentes **caractérisé en ce que** le corps de siège (1) est réalisé par moulage.

5. Siège selon l'une quelconque des revendications précédentes **caractérisé en ce que** le corps de siège (1) est une coque conformée en caisson creux.

6. Siège selon l'une quelconque des revendications précédentes **caractérisé en ce que** le corps de siège (1) comporte une ouverture (17) sur sa face avant apte à être obturée par le support d'assise (2).

7. Siège selon l'une quelconque des revendications précédentes de 1 à 4 **caractérisé en ce que** la traverse (5) de liaison et de renfort présente une longueur ou un allongement réglable.

8. Siège selon la revendication précédente **caractérisé en ce que** la traverse (5) de liaison et de renfort est une structure télescopique.

9. Siège selon la revendication précédente **caractérisé en ce que** la traverse (5) de liaison et de renfort est réalisée sous la forme d'un emmanchement tubulaire immobilisé en pivotement.

10. Siège selon l'une quelconque des revendications précédentes **caractérisé en ce que** les deux pièces de flanc (3) et (4) sont réunies par deux traverses (5) de liaison et de renfort tubulaires.

11. Siège selon l'une quelconque des revendications précédentes **caractérisé en ce que** le support d'assise (2) est une plaque mince, sensiblement rectangulaire, incurvée et galbée de façon anatomique pour recevoir en appui le corps du passager.

12. Siège selon l'une quelconque des revendications précédentes **caractérisé en ce que** l'une au moins des pièces de flanc (3) ou (4) comporte des moyens de fixation (14) à un montant (11) de structure ou autre élément de carrosserie de la voiture à équiper ou à un autre siège.

13. Siège selon la revendication précédente **caractérisé en ce que** les deux pièces de flanc (3) et (4) comportent des moyens de fixation (14) à un montant (11) de structure de la voiture ou à un autre siège.

14. Siège selon la revendication 12 ou 13 **caractérisé en ce que** les moyens de fixation comprennent des perçages (14), filetés ou non, coopérant avec soit des vis soit des boulons (13) ou des vis et des pièces-écrous, afin de fixer le siège à un montant (11) de structure de la voiture ou à un autre siège.

15. Siège selon la revendication précédente **caractérisé en ce qu'**au moins un des perçages (14) est réalisé à travers la pièce de flanc (3) ou (4) au niveau d'une surépaisseur de renfort (20).

16. Siège selon l'une quelconque des revendications précédentes **caractérisé en ce que** le support d'assise est plus large pour recevoir simultanément plusieurs passagers assis côte à côte.

17. Siège selon la revendication précédente **caractérisé en ce qu'**il est formé par la juxtaposition latérale et l'assemblage de deux sièges.

18. Siège selon l'une quelconque des revendications précédentes **caractérisé en ce qu'**il comporte un deuxième support d'assise à l'arrière permettant de recevoir simultanément plusieurs passagers assis dos à dos.

19. Siège selon la revendication précédente **caractérisé en ce que** le deuxième support d'assise à l'arrière est plus large et permet de recevoir simultanément à l'arrière plusieurs passagers assis côte à côte.

20. Siège selon l'une quelconque des revendications précédentes **caractérisé en ce qu'**il est habillé d'un revêtement renfermant une épaisseur de matière de rembourrage (18).

21. Siège selon l'une quelconque des revendications précédentes **caractérisé en ce qu'**il comporte en outre une ou plusieurs pièces auxiliaires choisies parmi les suivantes : accoudoir, appui-tête (24), coussin d'appui ischiatique (23).

## Claims

1. A single- or multi-person suspended seat, banquette, or other seating support for a passenger transportation vehicle **characterized in that** it consists of:
. two side pieces (3) and (4) with a vertical branch (6) and an horizontal branch (7) joined by at least one connecting and reinforcing cross piece (5) to form a seat body (1); and
. at least one seat support (2) covering the seat body (1);
and **in that** one of the side pieces (3) or (4) is suitable to be attached only by its vertical branch (6) to a vertical structural support (11) or another element of the body of the transportation vehicle at the appropriate height so the seat is cantilevered on said support or said vehicle body element, and **in that** the width of the seat is determined by adjusting the length of the at least one connecting and reinforcing element (5).

2. A seat according to claim 1 **characterized in that** a grip or restraint device (25) is attached to the seat body (1) only on the side piece (3) or (4) that is not attached to a vertical structural support (11) or other element of the body of the transportation vehicle.

3. A seat according to claim 1 or 2 **characterized in that** the seat support (2) is detachable.

4. A seat according to any one of the preceding claims **characterized in that** the seat body (1) is formed of a single molded piece.

5. A seat according to any one of the preceding claims **characterized in that** the seat body (1) is a shell shaped like a hollow box.

6. A seat according to any one of the preceding claims **characterized in that** the seat body (1) has an opening (17) on its front surface which can be closed by the seat support (2).

7. A seat according to any one of preceding claims 1 through 4 **characterized in that** the length or extension of connecting and reinforcing cross piece (5) is adjustable.

8. A seat according to the preceding claim **characterized in that** the connecting and reinforcing cross piece (5) is a telescoping structure.

9. A seat according to the preceding claim **characterized in that** the connecting and reinforcing cross piece (5) consists of a locked tubular element that is blocked from pivoting.

10. A seat according to any one of the preceding claims **characterized in that** the two side pieces (3) and (4) are connected by two tubular connecting and reinforcing cross pieces (5).

11. A seat according to any one of the preceding claims **characterized in that** the seat support (2) is a thin plate, generally rectangular, curved and anatomically contoured to accommodate the passenger's body.

12. A seat according to any one of the preceding claims **characterized in that** at least one of the side pieces (3) or (4) comprises a means (14) for attachment to a vertical structural support (11) or other element on the body of the vehicle to be equipped, or to another seat.

13. A seat according to the preceding claim **characterized in that** the two side pieces (3) and (4) comprise means (14) for attachment to a vertical structural support (11) on the vehicle or to another seat.

14. A seat according to claim 12 or 13 **characterized in that** the attachment means comprises drillings (14) which may or may not be threaded and which cooperate with either pins or bolts (13) or pins and screw elements for the purpose of attaching the seat to a vertical structural support (11) on the vehicle or to another seat.

15. A seat according to the preceding claim **characterized in that** at least one of the openings (14) is formed in the side piece (3) or (4) at the thicker, reinforced portion (20).

16. A seat according to any one of the preceding claims **characterized in that** the seat support is wider to simultaneously accommodate several passengers seated side-by-side.

17. A seat according to the preceding claim **characterized in that** it is formed by laterally juxtaposing and connecting two seats.

18. A seat according to any one of the preceding claims **characterized in that** it comprises a second seat support at the rear for the purpose of simultaneously accommodating several passengers seated back-to-back.

19. A seat according to the preceding claim **characterized in that** the second seat support at the rear is wider for the purpose of accommodating several passengers seated side-by-side.

20. A seat according to any one of the preceding claims **characterized in that** it has a covering that protects a layer of padding (18).

21. A seat according to any one of the preceding claims **characterized in that** it further comprises one or more auxiliary elements selected from the following: armrest, headrest (24), back support cushion (23).

## Patentansprüche

1. Hängender Sitz mit einem oder mehreren Sitzplätzen,
- bänken oder anderen zum Hinsetzen geeigneten Stützen für Passagiertransportfahrzeuge, **dadurch gekennzeichnet, dass** er von
- zwei Seitenteilen (3, 4) mit einem vertikalen (6) und einem horizontalen Abschnitt (7), welche durch wenigstens eine Querstrebe (5) zur Verbindung und Versteifung miteinander verbunden sind, um einen Sitzkörper (1) zu bilden; und
- wenigstens einem Sitzträger (2), welcher den Sitzkörper (1) bedeckt;
gebildet ist, und dass eines der Seitenteile (3) oder (4) geeignet ist, derart allein auf dem Niveau seines vertikalen Abschnittes (6) an einer Säule (11) der Struktur oder einem anderen Karosserieelement des Transportfahrzeugs in einer geeigneten Höhe befestigt zu werden, dass sich der Sitz gegenüber der Säule oder dem Karosserieelement des Fahrzeugs vorspringend montiert befindet, und dass die Breite des Sitzkörpers (1) durch das alleinige Längenmaß seiner wenigstens einen Querstrebe zur Verbindung und Versteifung erhalten ist.

2. Sitz nach Anspruch 1, **dadurch gekennzeichnet, dass** eine Abstütz- oder Halteeinrichtung (25) an dem Sitzkörper (1) allein auf dem Niveau seines Seitenteils (3) oder (4) befestigt ist, welche nicht an einer Säule (11) der Struktur oder einem anderen Karosserieelement des Transportfahrzeugs festgelegt ist.

3. Sitz nach Anspruch 1 oder 2, **dadurch gekennzeichnet, dass** der Sitzträger (2) abnehmbar ist.

4. Sitz nach einem der vorangehenden Ansprüche, **dadurch gekennzeichnet, dass** der Sitzkörper (1) durch Formen gefertigt ist.

5. Sitz nach einem der vorangehenden Ansprüche, **dadurch gekennzeichnet, dass** der Sitzkörper (1) von einer Schale gebildet ist, welche an einen Hohlkasten angepasst ist.

6. Sitz nach einem der vorangehenden Ansprüche, **dadurch gekennzeichnet, dass** der Sitzkörper (1) an seiner vorderen Seite eine Öffnung (17) aufweist, welche zur Aufnahme des Sitzträgers (2) geeignet ist.

7. Sitz nach einem der vorangehenden Ansprüche 1 bis 4, **dadurch gekennzeichnet, dass** die Querstrebe (5) zur Verbindung und Versteifung eine einstellbare Länge oder Verlängerung aufweist.

8. Sitz nach dem vorangehenden Anspruch, **dadurch gekennzeichnet, dass** die Querstrebe (5) zur Verbindung und Versteifung von einer teleskopierbaren Struktur gebildet ist.

9. Sitz nach dem vorangehenden Anspruch, **dadurch gekennzeichnet, dass** die Querstrebe (5) zur Verbindung und Versteifung in Form eines rohrförmigen, gegen Verschwenken festen Schaftes gebildet ist.

10. Sitz nach einem der vorangehenden Ansprüche, **dadurch gekennzeichnet, dass** die beiden Seitenteile (3, 4) durch zwei rohrförmige Querstreben (5) zur Verbindung und Versteifung miteinander verbunden sind.

11. Sitz nach einem der vorangehenden Ansprüche, **dadurch gekennzeichnet, dass** der Sitzträger (2) von einer dünnen, im Wesentlichen rechteckigen, gewölbten und in anatomischer Weise ausgebauchten Platte gebildet ist, um den Körper eines Passagiers abstützend aufzunehmen.

12. Sitz nach einem der vorangehenden Ansprüche, **dadurch gekennzeichnet, dass** wenigstens eines der beiden Seitenteile (3, 4) mit Befestigungsmitteln (14) zum Anbringen an einer Säule (11) der Struktur oder einem anderen Karosserieelement des Fahrzeugs oder an einem anderen Sitz ausgestattet ist.

13. Sitz nach dem vorangehenden Anspruch, **dadurch gekennzeichnet, dass** die beiden Seitenteile (3, 4) mit Befestigungsmitteln (14) zum Anbringen an einer Säule (11) der Fahrzeugstruktur oder an einem anderen Sitz ausgestattet sind.

14. Sitz nach Anspruch 12 oder 13, **dadurch gekennzeichnet, dass** die Befestigungsmittel Bohrungen (14) mit oder ohne Gewinde umfassen, welche mit Schrauben oder Bolzen (13) oder mit Schrauben sowie Muttern zusammenwirken, um den Sitz an einer Säule (11) der Fahrzeugstruktur oder an einem anderen Sitz zu befestigen.

15. Sitz nach dem vorangehenden Anspruch, **dadurch gekennzeichnet, dass** wenigstens eine der Bohrungen (14) derart ausgebildet ist, dass sie das Seitenteil (3) oder (4) auf dem Niveau der Überdicke einer Versteifung durchsetzt.

16. Sitz nach einem der vorangehenden Ansprüche, **dadurch gekennzeichnet, dass** der Sitzträger (2) hinreichend breit ist, um zugleich mehrere, nebeneinander sitzende Passagiere aufzunehmen.

17. Sitz nach dem vorangehenden Anspruch, **dadurch gekennzeichnet, dass** er durch eine seitliche Nebeneinanderanordnung und Befestigung zweier Sitze aneinander gebildet ist.

18. Sitz nach einem der vorangehenden Ansprüche, **dadurch gekennzeichnet, dass** er an der Rückseite einen zweiten Sitzträger aufweist, welcher eine Aufnahme von mehreren, Rücken an Rücken sitzenden Passagieren zugleich ermöglicht.

19. Sitz nach dem vorangehenden Anspruch, **dadurch gekennzeichnet, dass** der an der Rückseite angeordnete zweite Sitzträger breiter ist und an der Rückseite die Aufnahme von mehreren, nebeneinander sitzenden Passagieren zugleich ermöglicht.

20. Sitz nach einem der vorangehenden Ansprüche, **dadurch gekennzeichnet, dass** er mit einer Verkleidung bekleidet ist, welche eine Schicht Polstermaterial (18) enthält.

21. Sitz nach einem der vorangehenden Ansprüche, **dadurch gekennzeichnet, dass** er ferner eines oder mehrere zusätzliche Teile aufweist, welche aus der nachfolgenden Gruppe ausgewählt sind: Armstützen, Kopfstützen (24), Sitzbein-Stützkissen.
